# EUROPÄISCHE PATENTSCHRIFT

(11) **EP 3 649 430 B1**
(45) Veröffentlichungstag und Bekanntmachung des Hinweises auf die Patenterteilung: **15.12.2021**
(21) Anmeldenummer: 18749294.7
(22) Anmeldetag: 04.07.2018
(51) Int. Cl.: G01B 11/02, G01B 11/06

(54) **TERAHERTZ-MESSVORRICHTUNG UND EIN TERAHERTZ-MESSVERFAHREN ZUM VERMESSEN VON PRÜFOBJEKTEN**
TERAHERTZ MEASURING DEVICE AND TERAHERTZ MEASURING METHOD FOR MEASURING OBJECTS TO BE INSPECTED
DISPOSITIF DE MESURE TÉRAHERTZ ET PROCÉDÉ DE MESURE TÉRAHERTZ POUR MESURER DES OBJETS À TESTER

(30) Priorität: 04.07.2017 DE 102017114879
(43) Veröffentlichungstag der Anmeldung: 13.05.2020
(73) Patentinhaber: iNOEX GmbH Innovationen und Ausrüstungen für die Extrusionstechnik, 49324 Melle (DE)
(72) Erfinder: THIEL, Marius, 49090 Osnabrück (DE)
(74) Vertreter: Bremer, Ulrich
(86) Internationale Anmeldenummer: PCT/DE2018/100614
(87) Internationale Veröffentlichungsnummer: WO 2019/007465

(56) Entgegenhaltungen:
- NURIA LLOMBART ET AL: "Time-Delay Multiplexing of Two Beams in a Terahertz Imaging Radar", IEEE TRANSACTIONS ON MICROWAVE THEORY AND TECHNIQUES, PLENUM, USA, Bd. 58, Nr. 7, 1. Juli 2010 (2010-07-01), Seiten 1999-2007, XP011310925, ISSN: 0018-9480
- DATABASE WPI Week 201426 31. Dezember 2014 (2014-12-31) Thomson Scientific, London, GB; AN 2014-G52858 XP002785281, -& CN 103 575 654 A (HUBEI JIUZHIYANG INFRARED SYSTEM CO LTD) 12. Februar 2014 (2014-02-12)

## Beschreibung

Die Erfindung betrifft eine Terahertz-Messvorrichtung und ein Terahertz-Messverfahren zum Vermessen von Prüfobjekten durch Laufzeitmessungen. Hierbei können insbesondere Prüfobjekte bzw. Messobjekte aus KunststoffMaterialien, Keramik und zum Beispiel auch Papier oder Pappe vermessen werden, die für Terahertz-Strahlung durchlässig sind, jedoch gegenüber Luft einen deutlichen Unterschied in ihrem Brechungsindex aufweisen, sodass die Terahertz-Strahlung beim Durchtritt durch die Grenzfläche teilweise reflektiert wird und aus den Laufzeitunterschieden der Messpeaks bzw. Messsignale somit die Schichtdicken zwischen den Grenzflächen ermittelt werden können.

Somit können insbesondere auch Rohre und Schläuche vermessen werden, wobei hier zum Beispiel die Terahertzstrahlung durch jeweils einen vorderen und nachfolgend einen hinteren Wandbereich geleitet werden kann, sodass beide Wandbereiche und somit mindestens vier Grenzflächen erfasst werden. Somit kann für eine vollumfängliche Vermessung eines Rohres ein Schwenkwinkel der Messvorrichtung relativ zum Prüfobjekt von zum Beispiel 180° grundsätzlich ausreichend sein.

Ein großer Schwenkwinkel führt jedoch immer noch zu einem erheblichen Messaufwand. Auch ist zum Beispiel bei der Verwendung von Terahertzstrahlung mit optischen Sende- und Empfangseinheiten, zum Beispiel mit Femtosekunden-Lasern, eine erhebliche Masse zu schwenken. Alternativ hierzu ist es bekannt, mehrere Terahertz-Messvorrichtungen um ein Prüfobjekt herum anzuordnen, was wiederum mit entsprechenden höheren apparativen Kosten verbunden ist.

In "NURIA LLOMBART ET AL: "Time-Delay Multiplexing of Two Beams in a Terahertz Imaging Radar", IEEE TRANSACTIONS ON MICROWAVE THEORY AND TECHNIQUES, PLENUM, USA, Bd. 58, Nr. 7, 1. Juli 2010 (2010-07-01), Seiten 1999-2007 wird ein Time-Delay Multiplexing von zwei Strahlen bei einem Terahertz Imaging Radar beschrieben. Hierbei wird von einem Hybrid-Transceiver ein erster Strahl mit einer ersten Polarisationsrichtung ausgegeben, und in entgegengesetzte Richtung ein zweiter Strahl mit hierzu orthogonaler Polarisation, wobei der zweite Strahl über eine Verzögerungsstrecke auf ein Polarisationsgitter gestrahlt wird, dass diesen Strahl nachfolgend ableitet. Der erste Strahl gelangt aufgrund seiner ersten Polarisation durch das Polarisationsgitter. Die beiden Strahlen verlaufen nachfolgend mit einem Offset-Winkel über eine Spiegelanordnung auf ein Prüfobjekt, bei dem sie aufgrund des Offset-Winkels an zueinander versetzten Positionen auftreffen. Die vom Prüfobjekt nachfolgend reflektierte Strahlung wird über die Spiegelanordnung, das Polarisationsgitter und die optische Wegstrecke wiederum dem Hybrid-Transceiver zugeführt. Somit können nahe beieinander liegende Oberflächenbereiche des Prüfobjektes durch die zusätzliche Verzögerungsstrecke im Messsignal deutlich getrennt werden. Hierdurch wird ein 3D-Imaging, d. h. ein Bildgebungsverfahren zur Darstellung der Oberfläche eines Prüfobjektes, ausgebildet.

Aus CN 103 575 654 A ist ein Terahertz-Scanning-Imaging System bekannt, bei dem ein Terahertz-Strahl über einen ersten Beam-Splitter, eine Sammellinse, einen zweiten Beam-Splitter, einen planaren Spiegel in zwei Teilstrahlen unterteilt wird, die über einen ersten und zweiten Chopper zur mechanischen Unterteilung der Teilstrahlen und Parabolspiegel auf ein Prüfobjekt geleitet werden, wobei reflektierte Strahlen zurückgeleitet werden, um ein Imaging des Prüfobjektes durch Auswertungen in einer Auswerteeinrichtung zu ermöglichen.

Der Erfindung liegt die Aufgabe zugrunde, eine Terahertz- Messvorrichtung und ein Terahertz-Messverfahren zu schaffen, die mit geringem Aufwand und mit geringen Kosten eine Vermessung des Prüfobjektes ermöglichen.

Diese Aufgabe wird durch eine Terahertz-Messvorrichtung und ein Terahertz-Messverfahren nach den unabhängigen Ansprüchen gelöst. Die Unteransprüche beschreiben bevorzugte Weiterbildungen. Weiterhin ist eine Anordnung aus der Terahertz-Messvorrichtung und dem zu vermessenden Prüfobjekt vorgesehen.

Die erfindungsgemäße Terahertz-Messvorrichtung ist insbesondere zur Durchführung des erfindungsgemäßen Terahertz-Messverfahrens vorgesehen. Weiterhin ist das erfindungsgemäße Terahertz-Messverfahren insbesondere unter Anwendung bzw. Verwendung der erfindungsgemäßen Terahertz-Messvorrichtung vorgesehen, sodass beide in Kombination eingesetzt werden können.

Der Erfindung liegt der Gedanke zugrunde, aus einem von der Sende- und Empfangseinheit ausgesandten Terahertz-Strahl mindestens zwei Terahertz-Detektionsstrahlen auszubilden und diese in unterschiedlichen optischen Achsen auf das Prüfobjekt zu lenken, wobei die Detektionsstrahlen unterschiedlich lange Wegstrecken zurücklegen und nachfolgend erfasst werden können. Hierbei können sie nach unterschiedlichen Ausführungsformen erfasst werden: zum einen ist eine Messung in einem einzigen Messsignal möglich, in dem sie dann getrennt werden können, oder aber auch eine Messung in getrennten Messsignalen.

Ein deutlicher Vorteil der Erfindung liegt darin, dass mit einer Messvorrichtung somit mehrere Bereiche des Prüfobjektes erfasst werden können. Somit kann zum Beispiel eine Terahertz-Messvorrichtung bzw. ein Terahertz-Messkopf eingespart werden, indem bei einem bestehenden Terahertz-Messkopf lediglich eine Strahl-unterteilende Einrichtung und eine Reflexionseinrichtung ergänzt werden kann.

Hierzu kann gemäß einer ersten Ausführungsform als Strahl-unterteilende Einrichtung ein Strahlteiler, zum Beispiel ein halbdurchlässiger Spiegel, zum Teilen der ausgesandten Terahertz-Strahlung vorgesehen sein, der den ausgesandten Terahertzstrahl zum Beispiel zum einen durchlässt und zum anderen ablenkt, z. B. um 90°. Der zweite Terahertz-Strahl wird hierzu von einer Reflexionseinrichtung reflektiert, sodass eine längere optische Wegstrecke ausgebildet wird, zum Beispiel mit zweifacher Reflexion. Die zweite optische Teilachse kann somit gegenüber der ersten optischen Teilachse um einen beliebigen Winkel, z. B. 90° versetzt ausgerichtet werden.

Somit kann bereits die doppelte Anzahl von Teilbereichen des Prüfobjektes simultan vermessen werden. Bei kleinen Rohren und Schläuchen kann somit durch jeden Terahertz-Teilstrahl jeweils ein vorderer und hinterer Wandbereich erfasst werden, und somit durch die beiden Teilstrahlen vier Wandbereiche in einer einzigen Messung erfasst werden.

Ein besonderer Vorteil der Strahlunterteilung mit Ablenkung und nachfolgender Reflektion liegt darin, dass eine verlängerte Wegstrecke bzw. Laufzeit erreicht wird, wodurch die Messsignale bzw. Messpeaks im Signal deutlich getrennt werden können. Insbesondere können die getrennten Messungen zeitlich nacheinander oder sukzessive aufgenommen werden und somit auch vorzugsweise nachfolgend getrennt ausgewertet werden.

Alternativ zum Einsatz eines Strahlteilers ist auch eine sukzessive Messung mit den beiden Detektionsstrahlen möglich. Hierzu kann als Strahl-unterteilende Einrichtung z.B. ein verstellbarer Spiegel in der optischen Achse der THz-Sendeeinrichtung vorgesehen sein, der z.B. in einer ersten Stellung passiv ist und den Sendestrahl durchlässt und in einer zweiten Stellung den Sendestrahl umlenkt. Der verstellbare Spiegel kann mit geringer Masse, z.B. als dünne Metallscheibe, zwischen genau den beiden Stellungen verstellt werden, so dass z.B. ein Schrittmotor mit geringer Leistung, z.B. ohne Getriebe und mit schneller Schaltfrequenz, eingesetzt werden kann, der sehr langlebig, mechanisch verschleißarm und Energie sparend ist.

Weiterhin können bei beiden Ausführungsformen unterschiedliche Sendeeinrichtungen eingesetzt werden:
Bei einer Ausbildung mit einer kombinierten Sende- und Empfangseinheit, das heißt einem Terahertz-Transceiver, kann vorteilhafterweise die Strahl- unterteilende Einrichtung auch zum Reflektieren der vom Prüfobjekt reflektierten zweiten Terahertz-Detektionsstrahlung zurück zur gemeinsamen Sende- und Empfangseinheit genutzt werden. Somit können bestehende derartige Systeme kostengünstig und einfach nachgerüstet werden.

Hierbei kann die Reflexionseinrichtung zum Beispiel mit zwei spiegelnden Flächen, zum Beispiel jeweils zur Umlenkung der optischen Achse um 90° ausgebildet werden, wodurch auch die optische Delay-Strecke genau festgesetzt werden kann und hinreichend groß ist.

Gemäß einer zum kombinierten Terahertz-Transceiver alternativen Ausbildung können die Sende- und Empfangseinheit auch getrennt ausgebildet sein. Bei einer derartigen Empfangseinheit kann somit der von der Sendeeinheit ausgesandte Terahertzstrahl zum Beispiel entlang der optischen Achse auf das Prüfobjekt geleitet und von diesem reflektiert werden, und der abgelenkte zweite Terahertz-Detektionsstrahl in der versetzten zweiten Achse auf das Prüfobjekt geleitet und zurück reflektiert werden. Die Strahl- unterteilende Einrichtung kann hierbei dazu genutzt werden, den vom Prüfobjekt reflektierten ersten Teilstrahl zur Empfangseinheit zu reflektieren und den vom Prüfobjekt reflektierten zweiten Terahertz-Detektionsstrahl durchzulassen. Somit sind apparative Ausbildungen mit getrennter Sende- und Empfangs- einheit möglich, die insbesondere auch bei optischen Terahertz-Vorrichtungen mit Kurzpuls (Femtosekunden)-Lasern apparativ einfach ausbildbar sind.

Die Terahertzstrahlung kann insbesondere in einem Bereich von 10 GHz bis 50 THz oder 10 GHz bis 10 THZ, zum Beispiel 10 GHz bis 3 THz liegen. Sie kann insbesondere gepulst ausgesandt werden. Hierbei sind insbesondere optische Systeme, das heißt unter optischer Erzeugung, zum Beispiel mit Kurzpuls (Femtosekunden)-Lasern vorteilhaft. Grundsätzlich können jedoch auch zum Beispiel vollelektronische Systeme eingesetzt werden, z. B. auch mit Frequenz-Modulation.

Auch die Auswertung ist apparativ und software-mäßig einfach ausbildbar. So können auch bei der Ausführungsform mit Strahlteiler und somit simultaner Messung die einzelnen Signale getrennt werden: Indem die Delay-Strecke bzw. Streckendifferenz der beiden optischen Teilstrahlen zum Prüfobjekt und zurück größer ist als die entsprechende Strecke der ersten Teilstrahlung durch das Prüfobjekt und zurück können die Messsignale der beiden Messungen der Teilstrahlen im gemeinsamen Messsignal getrennt werden und die Messpeaks den einzelnen Grenzflächen jeder Messung zugeordnet werden. Somit entstehen keinerlei qualitative Verschlechterungen gegenüber separaten Messungen.

Mit der erfindungsgemäßen Terahertz-Messvorrichtung und dem erfindungsgemäßen Terahertz-Messverfahren wird eine Ermittlung zumindest einer Schichtdicke des Prüfobjektes durchgeführt. Vorteilhafterweise ist weiterhin die Ermittlung eines Abstandes und/oder eines Durchmessers und/oder einer Ovalität des Prüfobjektes möglich.

Die Erfindung wird im Folgenden anhand der beiliegenden Zeichnungen an einigen Ausführungsformen erläutert. Es zeigen:
- Fig. 1: eine Terahertz-Messvorrichtung gemäß einer ersten Ausführungsform mit Strahlteiler bei einer Ausbildung mit kombinierter Sende-Empfangs-Einheit;
- Fig. 2: eine Terahertz-Messvorrichtung mit Strahlteiler bei einer Ausbildung mit getrennter Sende- und Empfangs-Einheit;
- Fig. 3: a) das Reflexionssignal eines ersten Teilstrahls; b) das Reflexionssignal eines zweiten Teilstrahls; c) das Messsignal als überlagertes Empfangssignal aus beiden Teilsignalen;
- Fig. 4: eine zweite Ausführungsform mit verstellbarem Spiegel in einer ersten Spiegelstellung; und
- Fig. 5: die zweite Ausführungsform in einer zweiten Spiegelstellung.

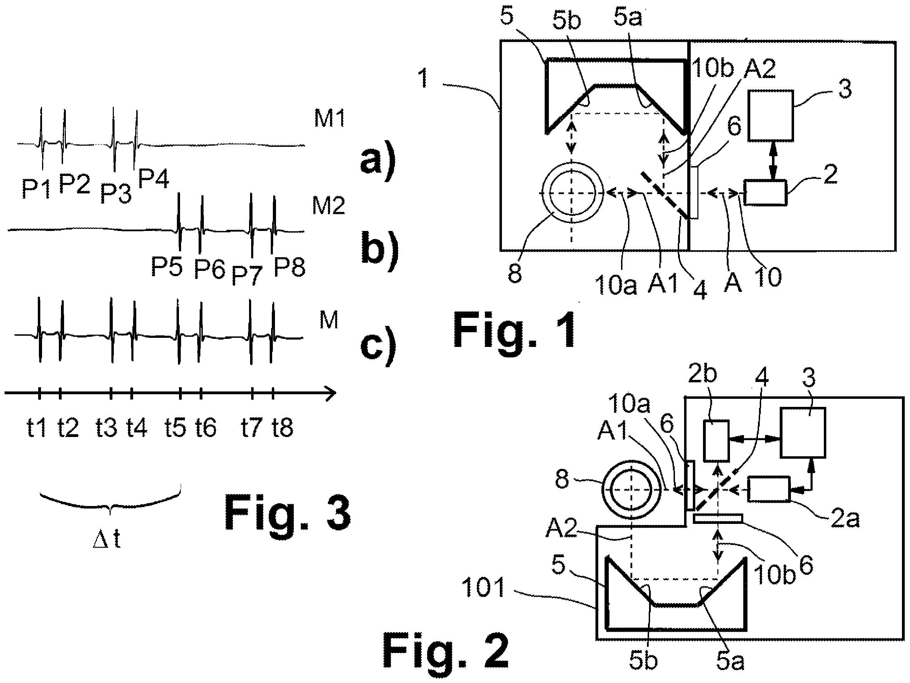

Eine Terahertz-Messvorrichtung 1 zur Vermessung eines Prüfobjektes 8 weist gemäß Figur 1 eine Sende-Empfangseinheit 2, eine Steuer- und Auswerteeinheit 3, als Strahlteiler einen halbdurchlässigen Spiegel 4, weiterhin eine Reflexionseinrichtung 5, und im allgemeinen auch eine Linse 6 als zusätzliche optische Einrichtung auf. Die Sende- und Empfangseinheit 2 sendet Terahertz-Strahlung 10 über die Linse 6 entlang einer optischen Achse A aus, die durch den Strahlteiler 4 in eine erste Terahertz-Teil-Strahlung 10a und eine zweite Terahertz-Teil-Strahlung 10b aufgespalten wird. Die erste Terahertz-Teil-Strahlung 10a fällt entlang einer ersten optischen Teilachse A1 auf das Prüfobjekt 8; die zweite Terahertz-Teil-Strahlung 10b fällt entlang einer von der ersten optischen Teilachse A1 verschiedenen zweiten optischen Teilachse A2 auf das Prüfobjekt 8.

Als Strahlteiler 4 ist hier ein halbdurchlässiger Spiegel vorgesehen, der nicht-senkrecht auf der optischen Achse 10 steht, zum Beispiel etwa unter einem Winkel von 45°, sodass die zweite Terahertz-Teil-Strahlung 10b um 90° abgelenkt und die erste Terahertz-Teil-Strahlung 10a weiter entlang der optischen Achse A verläuft und gemäß dieser Ausführungsform direkt auf das Prüfobjekt 8 gerichtet ist. Die zweite optische Terahertz-Teil-Strahlung 10b wird nachfolgend von der Reflexionseinrichtung 5 reflektiert; gemäß der gezeigten Ausführungsform ist die Reflexionseinrichtung 5 mit zwei spiegelnden Flächen 5a und 5b zum zweimaligen Reflektieren der zweiten optischen Terahertz-Teil-Strahlung 10b vorgesehen, sodass die zweite optische Teilstrahlung 10b mit ihrer zweiten optischen Teilachse A2, die zu der ersten optischen Teilachse A1 gemäß dieser Ausführungsform zum Beispiel in der gezeigten Ebene um 90° versetzt ist, auf das Prüfobjekt 8 auftrifft.

An dem Prüfobjekt 8 werden die Terahertz-Teilstrahlen 10a und 10b jeweils an Grenzflächen reflektiert. Gemäß Figur 1 wird als Prüfobjekt 8 ein Rohr mit einer Rohr-Außenwand und einer Rohr-Innenwand vermessen, wobei beide Terahertz-Teilstrahlen 10a und 10b durch das ganze Rohr 8 treten und somit jeweils an einem ersten und zweiten Wandbereich reflektiert werden, sodass jede der Terahertz-Teil-Strahlungen 10a, 10b jeweils an vier Grenzflächen reflektiert wird. Beide Teil-Strahlungen 10a und 10b treten jeweils senkrecht durch die Grenzflächen und werden somit jeweils zurück reflektiert, sodass die reflektierte erste Terahertz-Teil-Strahlung 10a wiederum entlang der ersten optischen Teilachse A1 und entsprechend die reflektierte zweite Terahertz-Teil-Strahlung 10b entlang der zweiten optischen Teilachse A2 zurück reflektiert wird.

Die reflektierte erste Terahertz-Teil-Strahlung 10a tritt somit zumindest teilweise bzw. mit einem Teil ihrer Intensität wiederum durch den halbdurchlässigen Spiegel 4 und durch die Linse 6 zurück zu der Sende- und Empfangseinheit 2. Figur 3a) zeigt das erste Messsignal M1, das von der Sendeund Empfangseinheit 2 durch die erste Terahertz-Teil-Strahlung 10a aufgenommen wird: beim Auftreffen auf die Oberfläche des vorderen Wandbereichs des Prüfobjektes 8, das aus einem Kunststoff-Material mit Brechungsindex n8= 1,5 gebildet ist, und nachfolgend beim Austreten aus dem Wandbereich des Rohres 8 werden jeweils Messpeaks P1, P2 erzeugt, woraufhin nachfolgend die erste Terahertz-Teil-Strahlung 10a weiter durch das Rohr 8 tritt und am hinteren Wandbereich wiederum an der Innenseite, das heißt beim Übergang vom Brechungsindex von etwa n=1 der Luft zum Brechungsindex von beispielsweise n8=1,5 des Kunststoffmaterials des Rohres 8 teilweise reflektiert wird, und nachfolgend wiederum beim Austreten aus dem Prüfobjekt 8, sodass auch hier zwei weitere Messpeaks P3, P4 erzeugt werden, die in dem zeitlichen Messdiagramm des ersten Messsignals M1 somit zeitlich aufeinander folgen. Der zeitliche Abstand t2-t1 bzw. t4 - t3 gibt die Wanddicke des Rohres 8 an, der zeitliche Abstand t3 - t2 den Innendurchmesser und t4-t1 den Außendurchmesser des Rohres 8, unter entsprechender Berücksichtigung der Brechungsindizes bzw. Ausbreitungsgeschwindigkeiten.

Die zweite optische Terahertz-Teil-Strahlung 10b tritt somit unter einer zweiten optischen Teilachse A2, die von der ersten optischen Teilachse A1 verschieden, zum Beispiel rechtwinklig zu dieser ist, auf das Prüfobjekt 8 und somit auf andere Wandbereiche. Die zweite Terahertz-Teil-Strahlung 10b erzeugt ein in Figur 3b) gezeigtes zweites Messsignal M2 mit entsprechend vier Messpeaks P5, P6, P7, P8, wobei das zweite Messsignal M2 aufgrund der längeren Laufzeit der zweiten Terahertz-Teil-Strahlung 10b, der insbesondere statt direkt vom halbdurchlässigen Spiegel 4 auf das Prüfobjekt 8 zu treten durch die mehrfachen Reflexionen an der Reflexionseinrichtung 5 mit einem längeren optischen Weg auf das Prüfobjekt 8 trifft, sodass das zweite Messsignal M2 gegenüber dem ersten Messsignal M1 zeitlich verzögert ist.

Hierbei ist die Messgeometrie, insbesondere auch die Anordnung und Ausbildung der Reflexionseinrichtung 5 derartig vorgesehen, dass der zusätzliche optische Teilweg, d.h. die Verzögerungsstrecke bzw. Delay-Strecke größer ist als der optische Weg, den der erste Terahertz-Teilstrahl beim Durchqueren und Reflektieren des gesamten Prüfobjektes 8 zurücklegt. Somit ist das zweite Messsignal M2 um eine Zeitdauer Δt = t5 - t1 gegenüber dem ersten Messsignal M1 verschoben, sodass sich die Peaks P1 bis P8 eindeutig trennen lassen.

In dem gemeinsamen Messsignal M kann somit Hierbei die Wanddicke wd an einer Stelle als wd= c (ti-tj) /2n ermittelt werden, mit c= Lichtgeschwindigkeit, n= Brechungsindex des Materials für die THz-Strahlung und ti- tj als zeitlicher Abstand der Messpeaks Pi und Pj, entsprechend auch der Rohrdurchmesser zwischen den Messpeaks P2 und P3 sowie P7 und P6.

Die Ausführungsform der Figur 1 kann auch insbesondere zur Nachrüstung einer bestehenden Terahertz-Messvorrichtung herangezogen werden, die bereits die Sende- und Empfangseinheit 2, Steuer- und Auswerteeinheit 3 und gegebenenfalls die Linse 6 aufweist. Hierbei sind entsprechend der Strahlteiler 4 und die Reflexionseinrichtung 5 nachzurüsten, sodass gegenüber dem vorherigen System in einer Messung gemäß dem Messsignal M der Figur 3c) die doppelte Anzahl von Wandbereichen vermessen werden kann. Somit kann zum Beispiel ein Rohr als Prüfobjekt 8 bereits vermessen werden, indem die Terahertz-Messvorrichtung 1 um einen Winkel von lediglich 90° geschwenkt wird, da jeder Teilstrahl 10a und 10b vollständig durch das Rohr 8 tritt und somit jeweils einen vorderen und hinteren Wandbereich erfasst.

Die Ausführungsform der Figur 2 zeigt eine Terahertz-Messvorrichtung 101, die eine Sendeeinheit 2a zum Aussenden eines Terahertzstrahls 10 und eine hiervon getrennte Empfangseinheit 2b aufweist. Die Sendeeinheit 2a sendet wiederum einen Terahertzstrahl 10 durch den Strahlteiler 4, sodass eine erste Terahertz-Teil-Strahlung 10a direkt - zum Beispiel wiederum durch eine Linse 6 - zu dem Prüfobjekt 8 gelangt und beim Durchtreten der Grenzfläche wiederum die Peaks P1, P2, P3, P4 - entsprechend der Ausführungsform der Figur 1 - erzeugt. Weiterhin wird in dem Strahlteiler 4 die zweite Terahertz-Teil-Strahlung 10b abgespalten, die wiederum über die Reflexionseinrichtung 5 in einer zweiten optischen Teilachse A2 auf andere Wandbereiche des Prüfobjektes 8 gelangt, und hierbei vom Strahlteiler 4 aus gegenüber der Wegstrecke des ersten optischen Teilstrahls 10a eine Verzögerungsstrecke (Delay-Strecke) aufweist, die größer als der optische Weg der ersten optischen Teilstrahlung 10a im Prüfobjekt 8 ist, sodass - entsprechend Figur 1 - die weiteren Messpeaks P5, P6, P7, P8 zeitlich deutlich getrennt von den ersten Messpeaks P1, P2, P3, P4 zum Strahlteiler 4 und zu der Empfangseinheit 2b gelangen.

Somit sind in der Ausführungsform der Figur 2 die Sendeeinheit 2a und die Empfangseinheit 2b getrennt, das heißt nicht als Transceiver ausgelegt, was apparative Vereinfachungen ermöglicht.

Die in den beiden Ausführungsformen in dem Strahlteiler 4 nicht zu der Empfangseinheit 2b reflektierten Anteile sind der Übersichtlichkeit halber nicht eingezeichnet.

Die Ausführungsformen können jeweils auch mit anderen Reflexionseinrichtungen 5 ausgebildet sein. Grundsätzlich können auch mehrere derartige Strahlteiler 4 vorgesehen sein, um den Terahertz-Strahl 10 in mehrere, das heißt mehr als zwei, Terahertz-Teilstrahlen aufzuspalten.

Beide Ausführungsformen ermöglichen somit jeweils mit nur einem Messkopf bzw. einer Terahertz-Messvorrichtung 1, 101 die Vermessung des Prüfobjektes 8 entlang zweier optischer Teil-Achsen A1, A2 und somit der doppelten Anzahl von Wandbereichen. Somit ist zum Beispiel der Schwenkweg der Terahertz-Messvorrichtung 1, 101 jeweils gegenüber einer herkömmlichen Ausbildung halbiert bzw. deutlich verringert. Die Qualität der Messung wird hierdurch nicht beeinträchtigt, da die Messpeaks P1-P8 der Messungen deutlich getrennt sind und daher separat ausgewertet werden können.

Entsprechend wird bei dem erfindungsgemäßen Terahertz-Messverfahren gemäß der ersten Ausführungsform:
- ein Terahertz-Strahl 10 ausgegeben entlang einer optischen Achse A ,
- der optische Terahertz-Strahl 10 aufgeteilt in mindestens eine erste Terahertz-Teil-Strahlung 10a und mindestens eine Terahertz-Teil-Strahlung 10b, die durch einen Strahlteiler 4 in unterschiedliche Richtungen gelenkt werden,
- wobei der zweite Terahertz-Teilstrahl 10b an einer Reflexionseinrichtung 5 reflektiert wird, vorzugsweise zweimal oder öfter,
- nachfolgend werden die Terahertz-Teil-Strahlungen 10a, 10b in unterschiedlichen optischen Teilachsen A1, A2 und auf unterschiedlichen Bereiche bzw. Stellen auf das Prüfobjekt 8 gelenkt, durchqueren dieses unter Teilreflektion an Grenzübergängen, insbesondere Schichtgrenzen,
   werden zurückreflektiert und gelangen entlang ihrer optischen Teilachsen A1 und A2 zurück,
- die vom Prüfobjekt 8 reflektierten Terahertz-Teilstrahlen 10a und 10b werden dann über den Strahlteiler 4 zurückgeworfen und von einer Sende- und Empfangseinheit, die als kombiniete Sende-Empfangseinheit 2 (Transceiver) oder auch separat als Sendeeinheit 2a und Empfangseinheit 2b ausgebildet sein, detektiert,
- sodass Laufzeiten t1-t8 der Strahlung an verschiedenen Grenzflächen der verschiedenen Wandbereiche bei beiden optischen Teilmessungen detektiert und - aufgrund einer größeren Delay-Strecke der optischen Teilstrahlen gegenüber der Messstrecke im Prüfobjekt 8 - getrennt werden können,
- sodass Schichtdicken bzw. Abstände des Prüfobjektes 8 an mehreren Bereichen durch die Steuer- und Auswerteeinheit 3 ermittelt und zum Beispiel auf Fehler überprüft werden kann.

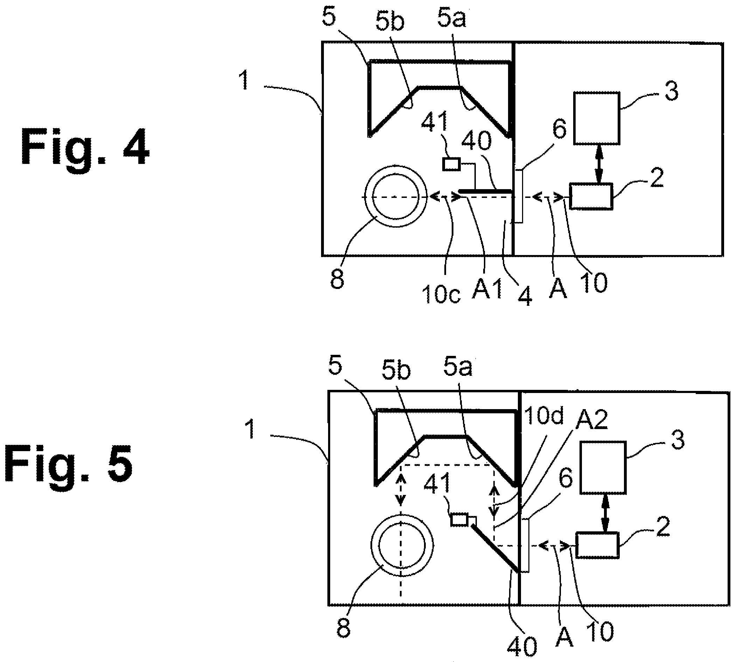

Fig. 4 und 5 zeigen eine weitere Ausführungsform, bei der als Strahl unterteilende Einrichtung ein verstellbarer Spiegel 40 vorgesehen ist, der durch eine Verstelleinrichtung 41 zwischen seinen beiden Stellungen hin- und her verstellt wird.

Der verstellbare Spiegel 40 kann z.B. als dünne Metallplatte, z.B. aus Aluminium, mit geringer Masse und somit geringem Trägheitsmoment ausgebildet sein, der von der Verstelleinrichtung 41 geschwenkt wird. Somit kann der verstellbare Spiegel 40 in der ersten, passiven Stellung der Fig. 4 außerhalb der optischen Achse A angeordnet sein oder auch flach in dieser liegen und somit die Terahertz-Strahlung 10 nicht oder nicht relevant beeinflussen. Gemäß Fig. 5 ist der verstellbare Spiegel 40 in seiner zweiten, aktiven Stellung, in der er die ausgesandte THz-Strahlung 10 ablenkt, z.B. um 90° als zweiten verstellbaren Detektionsstrahl 10d, wobei auch bei dieser Messung keine Abschwächung der Signalamplitude erfolgt; es liegt aber auch bei dieser Ausführungsform der Fig. 4, 5 - wie bei den Ausführungen zu Fig. 1 und 2, eine zeitliche Verzögerung der Messpeaks P5 bis P8 der zweiten Achse gegenüber den Messpeaks P1 bis P4 der ersten Achse vor entsprechend Fig. 3.

Somit kann gemäß dieser Ausführungsform der Fig. 4, 5 eine Messung erfolgen, die gegenüber den Teilmessungen mit halbdurchlässigen Spiegeln eine höhere Signalamplitude ermöglicht, da der THz-Strahl 10 nicht unterteilt wird. Es wird zwar die Beeinträchtigung einer mechanischen Verstellung in Kauf genommen, dafür aber eine höhere Signalamplitude erreicht. Die Verstelleinrichtung 41 kann z.B. ein Schrittmotor sein, der direkt ― ohne Getriebe ― den Spiegel 40 verstellt. Somit werden lediglich kleine Massen ohne relevanten Verschleiß verstellt.

### Bezugszeichenliste

- 1, 101: Terahertz-Messvorrichtung
- 2: Sende- und Empfangseinheit (Transceiver)
- 2a: Sendeeinheit
- 2b: Empfangseinheit
- 3: Steuer- und Auswerteeinheit
- 4: Strahlteiler, zum Beispiel halbdurchlässiger Spiegel
- 5: Reflexionseinrichtung, zum Beispiel mit zwei Reflexionsflächen
- 6: Linse
- 8: Prüfobjekt, insbesondere kleiner Schlauch oder Rohr aus Kunststoff
- 10: ausgesandte Terahertz-Strahlung
- 10a: erste Terahertz-Teil-Strahlung
- 10b: zweite Terahertz-Teil-Strahlung
- 10c: erste verstellbare Detektionsstrahlung
- 10d: zweite verstellbare Detektionsstrahlung
- 40: verstellbarer Spiegel
- 41: Verstelleinrichtung, z.B. Schrittmotor
- A: optische Achse
- A1: erste optische Teilachse
- A2: zweite optische Teilachse
- M: gemeinsames Messsignal
- M1: erstes Messsignal
- M2: zweites Messsignal
- P1 bis P8: Messpeaks im Messsignal (M)
- t1 bis t8: Zeitpunkte der Messpeaks im Messsignal (M)

## Patentansprüche

1. Terahertz-Messvorrichtung (1, 101) für Laufzeitmessungen von Prüfobjekten (8), für Schichtdickenmessungen, vorzugsweise auch Abstandsmessungen, der Prüfobjekte (8), wobei die Terahertz-Messvorrichtung (1, 101) aufweist:
eine Sende- und Empfangseinrichtung (2; 2a, 2b), die eingerichtet ist,
eine Terahertz-Strahlung (10) entlang einer optischen Achse (A) auszusenden und reflektierter Terahertz-Strahlung zu empfangen,
eine Steuer- und Auswerteeinheit (3), die eingerichtet und ausgebildet ist, die Sende- und Empfangseinheit (2; 2a, 2b) anzusteuern, und
Messsignale (M) der Sende- und Empfangseinheit (2; 2a, 2b) auszuwerten,
**dadurch gekennzeichnet, dass** die Vorrichtung eine Strahl-unterteilende Einrichtung (4, 40) enthält zum Unterteilen der ausgesandten Terahertz-Strahlung (10) in mindestens
- eine erste Terahertz- Detektionsstrahlung (10a, 10c) entlang einer ersten optischen Teilachse (A1) und
- eine zweite Terahertz- Detektionsstrahlung (10b, 10d) entlang einer von der ersten optischen Teilachse (A1) verschiedenen zweiten optischen Teilachse (A2), wobei die Vorrichtung weiterhin eine Reflexionseinrichtung (5) enthält zum Reflektieren der zweiten Terahertz- Detektionsstrahlung (10b, 10d) auf das Prüfobjekt (8) und Reflektieren der von dem Prüfobjekt (8) reflektierten zweiten Terahertz-Detektionsstrahlung (10b) zurück zu der Strahl-unterteilenden Einrichtung (4) und/oder der Sende- und Empfangseinheit (2; 2a, 2b),
wobei die Sende- und Empfangseinheit (2; 2a, 2b) eingerichtet und
ausgebildet ist, aus den an dem Prüfobjekt (8) reflektierten DetektionsStrahlungen (10a, 10b, 10c, 10d) mindestens ein Messsignal (M, M1,
M2) zu erzeugen und an die Steuer- und Auswerteeinheit (3) auszugeben, die eingerichtet ist, mindestens eine Schichtdicke des Prüfobjektes (8) zu ermitteln.

2. Terahertz-Messvorrichtung (1, 101) nach Anspruch 1, **dadurch gekennzeichnet, dass** die Strahl-unterteilende Einrichtung (4, 40) die vom Prüfobjekt (8) reflektierte Terahertz- Detektionsstrahlung (10b, 10d) entlang der optischen Achse (A) zur Sende- und Empfangseinheit (2) zurück reflektiert und/oder durchlässt.

3. Terahertz-Messvorrichtung (1, 101) nach einem der vorherigen Ansprüche, **dadurch gekennzeichnet, dass** die Reflexionseinrichtung (5) die zweite Terahertz-Detektionsstrahlung (10b, 10d) an einer oder mehreren Spiegel-Flächen (5a, 5b) reflektiert, z. B. jeweils um 90°, und in der zweiten optischen Teilachse (A2) auf das Prüfobjekt (8) lenkt, und die vom Prüfobjekt (8) reflektierte optische Terahertz-Detektionsstrahlung (10b, 10d) zweimal zurückreflektiert.

4. Terahertz-Messvorrichtung (1, 101) nach einem der vorherigen Ansprüche, **dadurch gekennzeichnet, dass** die optischen Weglängen der ersten und zweiten Terahertz-Detektionsstrahlung (10a, 10c, 10b, 10d) derartig unterschiedlich sind, dass die Messungen in einem gemeinsamen Messsignal (S) trennbar sind.

5. Terahertz-Messvorrichtung (1, 101) nach einem der vorherigen Ansprüche, **dadurch gekennzeichnet, dass** die erste optische Teilachse (A1) und die zweite optische Teilachse (A2) im Wesentlichen um 90° zueinander versetzt sind, vorzugsweise in der gleichen Ebene.

6. Terahertz-Messvorrichtung (1, 101) nach einem der vorherigen Ansprüche, **dadurch gekennzeichnet, dass** die Strahl-unterteilende Einrichtung ein Strahlteiler (4) ist, der die ausgesandte TerahertzStrahlung (10) teilweise als erste Terahertz-Teil-Strahlung (10a) durchlässt und teilweise als zweite Terahertz-Teil-Strahlung (10b) zu der Reflexionseinrichtung (5) reflektiert, vorzugsweise unter einem Winkel von 90° gegenüber der optischen Achse (A),
wobei die Sende- und Empfangseinheit (2; 2a, 2b) aus den an dem Prüfobjekt (8) reflektierten Teil-Strahlungen (10a, 10b) ein gemeinsames Messsignal (M) erzeugt und an die Steuer- und Auswerteeinheit (3) ausgibt.

7. Terahertz-Messvorrichtung (1, 101) nach einem der Ansprüche 1 bis 5, **dadurch gekennzeichnet, dass** die Strahl-unterteilende Einrichtung einen verstellbaren Spiegel (40) und eine Verstelleinrichtung (41) zur Verstellung des Spiegels (40) aufweist,
wobei der verstellbare Spiegel (40) die ausgesandte Terahertz-Strahlung (10) in einer ersten Stellung und zweiten Stellung unterschiedlich ablenkt, vorzugsweise in der ersten Stellung ohne Ablenkung und in der zweiten mit Ablenkung unter einem Winkel von 90° gegenüber der optischen Achse (A),
wobei die Sende- und Empfangseinheit (2; 2a, 2b) aus den an dem Prüfobjekt (8) reflektierten Detektionsstrahlungen (10c, 10d) Messsignale (M1, M2) erzeugt und an die Steuer- und Auswerteeinheit (3) ausgibt.

8. Terahertz-Messvorrichtung (1) nach einem der vorherigen Ansprüche, **dadurch gekennzeichnet, dass** eine kombinierte Sende- und Empfangseinheit (2), z.B. THz-Transceiver, zum sowohl Aussenden als auch Empfangen der Terahertz-Strahlung (10) vorgesehen ist.

9. Terahertz-Messvorrichtung (101) nach einem der Ansprüche 1 bis 7, **dadurch gekennzeichnet, dass**
eine Empfangseinheit (2b) von einer Sendeeinheit (2a) getrennt ist, wobei die von der Sendeeinheit (2a) ausgesandte Terahertzstrahlung (10) durch die Strahl-unterteilende Einrichtung (4, 40) in die beiden Terahertz-Detektionsstrahlen (10a, 10b, 10c, 10d) unterteilt wird, und die vom Prüfobjekt (8) reflektierte Terahertz-Detektionsstrahlung (10a, 10c) und die vom Prüfobjekt (8) und der Reflexionseinrichtung (5) reflektierte Terahertz- Detektionsstrahlung (10b, 10d) jeweils über die Strahl-unterteilende Einrichtung (4, 40) gelangen.

10. Terahertz-Messvorrichtung (1, 101) nach Anspruch 9, **dadurch gekennzeichnet, dass** die Empfangseinheit (2b) die von der Strahl-unterteilenden Einrichtung (4, 40) durchgelassene Terahertz- Strahlung (10b, 10d) und die von der Strahl-unterteilenden Einrichtung (4, 40) reflektierte Terahertz-Detektionsstrahlung (10a, 10c) aufnimmt.

11. Terahertz-Messvorrichtung (1, 101) nach einem der vorherigen Ansprüche, **dadurch gekennzeichnet, dass** in der optischen Achse (A) und/oder in den optischen Teilachsen (A1, A2) Strahl führende Elemente, zum Beispiel Linsen (6), zur Bündelung des Strahls vorgesehen sind.

12. Terahertz-Messvorrichtung nach einem der vorherigen Ansprüche,
**dadurch gekennzeichnet, dass** Terahertzstrahlung (10) im Frequenzbereich von 10 GHz bis 10 THz eingesetzt wird, insbesondere mit optischer Sende- und Empfangseinheit (2; 2a, 2b), zum Beispiel mit einem Kurzpuls-Laser.

13. Anordnung aus einer Messvorrichtung (1, 101) nach einem der vorherigen Ansprüche und dem Prüfobjekt (8),
wobei die optische Wegstrecke der zweiten Terahertz-Detektionsstrahlung (10b, 10d) von der Strahl-unterteilenden Einrichtung (4, 40) über die Reflexionseinrichtung (5) zu dem ersten Auftreffen auf das Prüfobjekt (8) und zurück über die Reflexionseinrichtung (5) zu der Strahl-unterteilenden Einrichtung (4, 40) (4, 40) größer ist als die gesamte optische Wegstrecke der ersten Terahertz-Detektionssrahlung (10a) von dem Strahlteiler (4) durch das Prüfobjekt (8) und zurück zum Strahlteiler (4), zur Trennung der ersten Messpeaks (P1, P2, P3, P4) der ersten Terahertz-Detektionsstrahlung (10a, 10c) und der zweiten Messpeaks (P5, P6, P7, P8) der zweiten Terahertz-Detektionsstrahlung (10b, 10d).

14. Anordnung nach Anspruch 13, **dadurch gekennzeichnet, dass** ein gemeinsames Messsignal (S) für beide Messungen vorgesehen ist und die zweiten Messpeaks (P5, P6, P7, P8) der zweiten Terahertz-Teilstrahlung (10b) in dem gemeinsamen Messsignal (M) zeitlich getrennt von den ersten Messpeaks (P1, P2, P3, P4), vorzugsweise nach diesen oder alternierend, von der Sende- und Empfangseinheit (2; 2a, 2b) empfangen werden.

15. Terahertz-Messverfahren zum Vermessen eines Prüfobjektes (8), mit mindestens folgenden Schritten:
Aussenden eines Terahertz-Strahls (10) entlang einer optischen Achse (A) zu einer Strahl-unterteilenden Einrichtung (4, 40),
Aufteilen der Terahertz-Strahlung (10) in mindestens eine erste Terahertz-Detektionsstrahlung (10a, 10c) und eine zweite Terahertz- Detektionsstrahlung (10b, 10d),
Ausgeben der ersten Terahertz- Detektionsstrahlung (10a, c) entlang einer ersten optischen Teilachse (A1) auf das Prüfobjekt (8) und Reflektieren der ersten Terahertz- Detektionsstrahlung (10a, c) an Grenzflächen des Prüfobjektes (8) zurück als reflektierte erste Terahertz-Detektionsstrahlung (10a) zu der Strahl-unterteilenden Einrichtung (4, 40),
Ausgeben der zweiten Terahertz- Detektionsstrahlung (10b, d) über eine Reflexionseinrichtung (5) mit mindestens einmaligem Reflektieren an der Reflexionseinrichtung (5), und Ausrichten der zweiten Terahertz- Detektionsstrahlung (10b, d) entlang einer von der ersten optischen Teilachse (A1) verschiedenen zweiten optischen Teilachse (A2) auf das Prüfobjekt (8),
Reflektieren der von dem Prüfobjekt (8) reflektierten zweiten Terahertz-Teilstrahlung (10b) zurück zu der Strahl-unterteilenden Einrichtung (4, 40),
Leiten der reflektierten ersten und zweiten Terahertz- Detektionsstrahlung (10a, 10b, 10c, 10d) von der der Strahl-unterteilenden Einrichtung (4, 40) zu der Sende- und Empfangseinheit (2; 2a, 2b) und Empfangen in der Sende- und Empfangseinheit (2; 2a, 2b),
Erzeugen mindestens eines Messsignals (M, M1, M2) und Auswertung des Messsignals (M M1, M2) und Ermittlung von Schichtdicken des Prüfobjektes (8).

16. Messverfahren nach Anspruch 15, **dadurch gekennzeichnet, dass** die ausgesandte Terahertz-Strahlung (10) durch einen als Strahl-unterteilende Einrichtung dienenden Strahlteiler (4) simultan in eine die erste Detektionsstrahlung darstellende erste Teilstrahlung (10a) und eine die zweite Detektionsstrahlung darstellende zweite Teilstrahlung (10b) unterteilt wird und nach Reflektion am Prüfobjekt (8) wieder zusammengeführt wird und nachfolgend in einem gemeinsamen Messsignal (M) aufgenommen wird.

17. Messverfahren nach Anspruch 16, **dadurch gekennzeichnet, dass** die zweite Terahertzstrahlung (10b) in einer gegenüber der ersten Terahertz-Teilstrahlung (10a) derartig längeren optischen Strecke ausgesandt wird, dass die Zeitdauer des ersten Messsignals (M1) der ersten Terahertz-Teilstrahlung (10a) kleiner ist als die zeitliche Verzögerung (Δt) des zweiten Messsignals (M2) gegenüber dem ersten Messsignals (M1), und die beiden Messsignale (M1, M2) der Terahertz-Teil-strahlungen (10a, 10b) zeitlich getrennt in dem gemeinsamen Messsignal (M) vorliegen.

18. Messverfahren nach Anspruch 15, **dadurch gekennzeichnet, dass** als Strahl-unterteilende Einrichtung ein verstellbarer Spiegel (40) zwischen einer ersten und zweiten Stellung verstellt wird, in denen er die THZ-Strahlung entlang unterschiedlicher optischer Teil-Achsen (A1, A2) ablenkt.

## Claims

1. Terahertz measuring apparatus (1, 101) for run-time measurements of test objects (8), for wall thickness measurements, preferably also distance measurements, of the test objects (8), said terahertz measuring apparatus (1, 101) comprising:
a transmitter and receiver unit (2; 2a, 2b) which is adapted to emit a terahertz radiation (10) along an optical axis (A) and to receive reflected terahertz radiation,
a controller and evaluation unit (3) which is adapted and designed to drive the transmitter and receiver unit (2; 2a, 2b) und to evaluate measuring signals (M) of the transmitter and receiver unit (2; 2a, 2b),
**characterised in that** the apparatus includes a beam splitting means (4, 40) to split up the emitted terahertz radiation (10) into at least
- one first terahertz detection beam (10a, 10c) along a first optical partial axis (A1) and
- one second terahertz detection beam (10b, 10d) along a second optical partial axis (A2) different from the fist optical partial axis (A1), the apparatus further including
a reflection device (5) for reflecting the second terahertz detection beam (10b, 10d) onto said test object (8) and reflecting the second terahertz detection beam (10b), reflected from said test object (8),
back towards said beam splitting means (4) and/or said transmitter and receiver unit (2; 2a, 2b),
said transmitter and receiver unit (2; 2a, 2b) being adapted to generate at least one measuring signal (M, M1, M2) from the detection beams (10a, 10b, 10c, 10d) reflected on said test object (8) and put it out to said controller and evaluation unit (3) which is adapted to determine at least one layer thickness of said test object (8).

2. Terahertz measuring apparatus (1, 101) according to claim 1, **characterised in that** said beam splitting means (4, 40) reflects the terahertz detection beam (10b, 10d) reflected from said test object (8) back towards said transmitter and receiver unit (2) along the optical axis (A) and/or passes the same.

3. Terahertz measuring apparatus (1, 101) according to one of the above claims, **characterised in that** said reflection device (5) reflects the second terahertz detection beam (10b, 10d) at one or more mirror surfaces (5a, 5b), e.g. each by 90°, and directs then onto said test object (8) in the second optical partial axis (A2), and reflects the optical terahertz detection beam (10b, 10d) reflected from said test object (8) back twice.

4. Terahertz measuring apparatus (1, 101) according to one of the above claims, **characterised in that** the optical path lengths of the first and second terahertz detection beams (10a, 10c, 10b, 10d) are different from one another in such a way that the measurements in a common measuring signal (S) can be separated.

5. Terahertz measuring apparatus (1, 101) according to one of the above claims, **characterised in that** the first optical partial axis (A1) and the second optical partial axis (A2) are offset in relation to each other essentially by 90°, preferably in the same plane.

6. Terahertz measuring apparatus (1, 101) according to one of the above claims, **characterised in that** said beam splitting means is a beam splitter (4) partially passing the emitted terahertz radiation (10) as first partial terahertz radiation (10a) and partially reflecting it as second partial terahertz radiation (10b) to said reflection device (5), preferably at an angle of 90° compared to the optical axis (A),
said transmitter and receiver unit (2; 2a, 2b) generating a common measuring signal (M) from the partial beams (10a, 10b) reflected on said test object (8) and putting this out to said controller and evaluation unit (3).

7. Terahertz measuring apparatus (1, 101) according to one of the claims 1 through 5, **characterised in that** said beam splitting means comprises an adjustable mirror (40) and an adjustment means (41) for adjusting said mirror (40),
said adjustable mirror (40) deflecting the emitted terahertz radiation (10) differently in a first position and second position, preferably without deflection in said first position and in said second with deflection at an angle of 90° compared to the optical axis (A),
said transmitter and receiver unit (2; 2a, 2b) generating measuring signals (M1, M2) from the detection beams (10c, 10d) reflected at said test object (8) and putting the same out to said to said controller and evaluation unit (3).

8. Terahertz measuring apparatus (1) according to one of the above claims, **characterised in that** a combined transmitter and receiver unit (2), e.g. a THz transceiver, is provided both for emitting as well as for receiving the terahertz radiation (10).

9. Terahertz measuring apparatus (101) according to one of the claims 1 through 7, **characterised in that**
a receiver unit (2b) is provided separate from a transmitter unit (2a), whereby the terahertz radiation (10) emitted by the transmitter unit (2a) is split up by said beam splitting means (4, 40) into the two terahertz detection beams (10a, 10b, 10c, 10d), and the terahertz detection beam (10a, 10c) reflected from said test object (8) and the terahertz detection beam (10b, 10d) reflected from said test object (8) and said reflection device (5) each pass said beam splitting means (4, 40).

10. Terahertz measuring apparatus (1, 101) according to claim 9, **characterised in that** said receiver unit (2b) receives the terahertz-radiation (10b, 10d) passed by said beam splitting means (4, 40) and the terahertz detection beam (10a, 10c) reflected by said beam splitting means (4, 40).

11. Terahertz measuring apparatus (1, 101) according to one of the above claims, **characterised in that** in the optical axis (A) and/or in the optical partial axes (A1, A2) beam guiding elements, for example lenses (6), are provided for focussing the beam.

12. Terahertz measuring apparatus according to one of the above claims, **characterised in that** terahertz radiation (10) in a frequency range of between 10 GHz and 10 THz is utilised, in particular, using an optical transmitter and receiver unit (2; 2a, 2b), for example, using a short pulse laser.

13. Arrangement consisting of a measuring device (1, 101) according to one of the above claims and the test object (8),
whereby the optical path of the second terahertz detection beam (10b, 10d) from the beam splitting means (4, 40) via the reflection device (5) to the first point of impingement onto the test object (8) and back via the reflection device (5) to the beam splitting means (4, 40) (4, 40) is longer than the entire optical path of the first terahertz detection beam (10a) from the beam splitter (4) through the test object (8) and back to the beam splitter (4), for separating the first measuring peaks (P1, P2, P3, P4) of the first terahertz detection beam (10a, 10c) and the second measuring peaks (P5, P6, P7, P8) of the second terahertz detection beam (10b, 10d).

14. Arrangement according to claim 13, **characterised in that** a common measuring signal (S) for both measurements is provided, and the second measuring peaks (P5, P6, P7, P8) of the second partial terahertz beam (10b) in the common measuring signal (M) are received by the transmitter and receiver unit (2; 2a, 2b) separately from the first measuring peaks (P1, P2, P3, P4), preferably after the former or alternatingly.

15. Terahertz measuring method for measuring a test object (8), comprising at least the following steps:
emitting a terahertz beam (10) along an optical axis (A) towards a beam splitting means (4, 40),
splitting up the terahertz radiation (10) into at least one first terahertz detection beam (10a, 10c) and one second terahertz detection beam (10b, 10d),
putting out the first terahertz detection beam (10a, c) along a first optical partial axis (A1) onto the test object (8) and reflecting back the first terahertz detection beam (10a, c) on boundary surfaces of the test object (8) as reflected first terahertz detection beam (10a) towards the beam splitting means (4, 40),
putting out the second terahertz detection beam (10b, d) via a reflection device (5) including reflecting at least once on the reflection device (5), and aligning the second terahertz detection beam (10b, d) along a second optical partial axis (A2) different from the first optical partial axis (A1) onto the test object (8),
reflecting back the second partial terahertz beam (10b) reflected from the test object (8) towards the beam splitting means (4, 40),
guiding the reflected first and second terahertz detection beam (10a, 10b, 10c, 10d) from the beam splitting means (4, 40) towards the transmitter and receiver unit (2; 2a, 2b) and receiving the same in the transmitter and receiver unit (2; 2a, 2b),
generating at least one measuring signal (M, M1, M2), and evaluating said measuring signal (M M1, M2), and determining distances of the test object (8).

16. Measuring method according to claim 15, **characterised in that** the emitted terahertz radiation (10) is split up, by means of a beam splitter (4) serving as beam splitting means, simultaneously into a first partial beam (10a) representing the first detection beam and a second partial beam (10b) representing the second detection beam, and following reflection on the test object (8), is re-merged and subsequently incorporated in a common measuring signal (M).

17. Measuring method according to claim 16, **characterised in that** die the second terahertz radiation (10b) is emitted in an optical path which is longer compared to the first partial terahertz beam (10a) in such a way that the duration of the first measuring signal (M1) of the first partial terahertz beam (10a) is shorter than the temporal delay (Δt) of the second measuring signal (M2) in relation to the first measuring signal (M1), and the two measuring signals (M1, M2) of the partial terahertz beams (10a, 10b) are present in the common measuring signal (M) separated in time.

18. Measuring method according to claim 15, **characterised in that,** as beam splitting means, an adjustable mirror (40) is adjusted between a first and second position, in which it deflects the THZ radiation along different optical partial axes (A1, A2).

## Revendications

1. Dispositif de mesure en térahertz (1, 101) destiné à des mesures de temps de propagation vers des objets à tester (8), des mesures d'épaisseurs de couches, et aussi, de préférence, des mesures de distance des objets à tester (8), le dispositif de mesure en térahertz (1, 101) comprenant :
un moyen d'émission et de réception (2, 2a, 2b) qui est agencé pour émettre un rayonnement en térahertz (10) le long d'un axe optique (A) et recevoir un rayonnement en térahertz réfléchi,
une unité de commande et d'évaluation (3) qui est agencée et conçue pour commander le moyen d'émission et de réception (2, 2a, 2b) et évaluer des signaux de mesure (M) du moyen d'émission et de réception (2, 2a, 2b),
**caractérisé en ce que** le dispositif comporte un moyen de division de faisceau (4, 40) pour diviser le rayonnement en térahertz émis (10) en au moins
- un premier rayonnement de détection en térahertz (10a, 10c) le long d'un premier axe optique partiel (A1) et
- un deuxième rayonnement de détection en térahertz (10b, 10d) le long d'un deuxième axe optique partiel (A2) différent du premier axe optique partiel (A1), le dispositif comportant en plus un moyen de réflexion(5) destiné à réfléchir le deuxième rayonnement de détection en térahertz (10b, 10d) sur l'objet à tester (8) et rétro-réfléchir le deuxième rayonnement de détection en térahertz (10b) réfléchi par l'objet à tester (8) vers le moyen de division de faisceau (4) et/ou vers le moyen d'émission et de réception (2, 2a, 2b), le moyen d'émission et de réception (2, 2a, 2b) étant agencé et conçu pour générer à partir des rayonnements de détection (10a, 10b, 10c, 10d) réfléchis sur l'objet à tester (8) au moins un signal de mesure (M, M1, M2) et envoyer ce signal de mesure à l'unité de commande et d'évaluation (3) qui est agencée pour déterminer au moins une épaisseur de couche de l'objet à tester (8).

2. Dispositif de mesure en térahertz (1, 101) suivant la revendication 1, **caractérisé en ce que** le moyen de division de faisceau (4, 40) rétro-réfléchit ou transmet le rayonnement de détection en térahertz réfléchi (10b, 10d) par l'objet à tester (8) le long de l'axe optique (A) au moyen d'émission et de réception (2).

3. Dispositif de mesure en térahertz (1, 101) suivant une des revendications précédentes, **caractérisé en ce que** le moyen de réflexion (5) réfléchit le deuxième rayonnement de détection en térahertz (10b, 10d) sur une ou plusieurs surfaces miroir (5a, 5b), par exemple à 90° respectivement, et le dirige dans le deuxième axe optique partiel (A2) sur l'objet à tester (8) et rétro-réfléchit deux fois le rayonnement de détection en térahertz optique (10b, 10d) réfléchi par l'objet à tester.

4. Dispositif de mesure en térahertz (1, 101) suivant une des revendications précédentes, **caractérisé en ce que** les longueurs de parcours optique du premier et deuxième rayonnement de détection en térahertz (10a, 10c, 10b, 10d) sont différentes de telle sorte que les mesures dans un signal de mesure commun (S) sont séparables.

5. Dispositif de mesure en térahertz (1, 101) suivant une des revendications précédentes, **caractérisé en ce que** le premier axe optique partiel (A1) et le deuxième axe optique partiel (A2) sont sensiblement décalés de 90° l'un par rapport à l'autre, de préférence dans le même plan.

6. Dispositif de mesure en térahertz (1, 101) suivant une des revendications précédentes, **caractérisé en ce que** le moyen de division de faisceau est un séparateur de faisceau (4) qui transmet le rayonnement en térahertz émis (10) partiellement comme premier rayonnement en térahertz partiel (10a) et le réfléchit partiellement comme deuxième rayonnement en térahertz partiel (10b) vers le moyen de réflexion (5), de préférence en formant un angle de 90° par rapport à l'axe optique (A), le moyen d'émission et de réception (2, 2a, 2b) générant à partir des rayonnements partiels réfléchis sur l'objet à tester (8) un signal de mesure commun (M) qu'il envoie à l'unité de commande et d'évaluation (3).

7. Dispositif de mesure en térahertz (1, 101) suivant une des revendications 1 à 5, **caractérisé en ce que** le moyen de division de faisceau présente un miroir réglable (40) et un dispositif de réglage (41) pour le réglage du miroir (40),
le miroir réglable (40) déviant le rayonnement en térahertz émis (10) de manière différente dans une première position et dans une deuxième position, de préférence, dans la première position sans déviation et dans la deuxième position avec une déviation formant un angle de 90° par rapport à l'axe optique (A),
le moyen d'émission et de réception (2, 2a, 2b) générant à partir des rayonnements de détection (10c, 10d) réfléchis sur l'objet à tester (8) des signaux de mesure (M1, M2) qu'il envoie à l'unité de commande et d'évaluation (3).

8. Dispositif de mesure en térahertz (1, 101) suivant une des revendications précédentes, **caractérisé en ce qu'**il est prévu un moyen d'émission et de réception combiné (2), par exemple un émetteur-récepteur en THz et pour l'émission et pour la réception du rayonnement en térahertz (10).

9. Dispositif de mesure en térahertz (101) suivant une des revendications 1 à 7, **caractérisé en ce qu'**un moyen de réception (2b) est séparé d'un moyen d'émission (2a), le rayonnement en térahertz (10) émis par le moyen d'émission (2a) étant divisé par le moyen de division de faisceau (4, 40) en deux faisceaux de détection en térahertz (10a, 10b, 10c, 10d), et **en ce que** le rayonnement de détection en térahertz (10a, 10c) réfléchi par l'objet à tester (8) et le rayonnement de détection en térahertz (10b, 10d) réfléchi par l'objet à tester (8) et le moyen de réflexion (5) passent respectivement via le moyen de division de faisceau (4, 40).

10. Dispositif de mesure en térahertz (1, 101) suivant la revendication 9, **caractérisé en ce que** le moyen de réception (2b) reçoit le rayonnement en térahertz (10b, 10d) transmis par le moyen de division de faisceau (4, 40) et le rayonnement de détection en térahertz (10a, 10b) réfléchi par le moyen de division de faisceau (4, 40).

11. Dispositif de mesure en térahertz (1, 101) suivant une des revendications précédentes, **caractérisé en ce que** pour la concentration du faisceau des éléments guidant le faisceau, par exemple des lentilles (6), sont prévus dans l'axe optique (A) et/ou dans les axes optiques partiels.

12. Dispositif de mesure en térahertz (1, 101) suivant une des revendications précédentes, **caractérisé en ce qu**'un rayonnement en térahertz (10) dans la plage de fréquences de 10 GHz à 10 THz est utilisé, en particulier avec un moyen d'émission et de réception optique (2, 2a, 2b), par exemple un laser.

13. Agencement comprenant un dispositif de mesure (1, 101) suivant une des revendications précédentes et l'objet à tester (8),
le parcours optique du deuxième rayonnement de détection en térahertz (10b, 10d) à partir du moyen de division de faisceau (4, 40) via le moyen de réflexion (5) jusqu'à la première incidence sur l'objet à tester (8) et le retour via le moyen de réflexion (5) au moyen de division de faisceau (4, 40) étant supérieur à l'ensemble du parcours optique du premier rayonnement de détection en térahertz (10a) à partir du séparateur de faisceau (4), à travers l'objet à tester (8) et le retour au séparateur de faisceau (4) pour la séparation des premières pointes de mesure (P1, P2, P3, P4) du premier rayonnement de détection en térahertz (10a, 10c) et des deuxièmes pointes de mesure (P5, P6, P7, P8) du deuxième rayonnement de détection en térahertz (10b, 10d).

14. Agencement suivant la revendication 13, **caractérisé en ce qu'**il est prévu un signal de mesure commun (S) pour les deux mesures, et les deuxièmes pointes de mesure (P5, P6, P7, P8) du deuxième rayonnement en térahertz partiel (10b) sont reçues par le moyen d'émission et de réception (2, 2a, 2b) dans le signal de mesure commun (M) de manière séparée dans le temps des premières pointes de mesure (P1, P2, P3, P4), de préférence ultérieurement à ou en alternance avec celles-ci.

15. Procédé de mesure en térahertz destiné à mesurer un objet à tester (8), le procédé comprenant au moins les étapes suivantes :
émission d'un faisceau en térahertz (10) le long d'un axe optique (A) vers un moyen de division de faisceau (4, 40),
division du rayonnement en térahertz (10) en au moins un premier rayonnement de détection en térahertz (10a, 10c) et un deuxième rayonnement de détection en térahertz (10b, 10d),
émission du premier rayonnement de détection en térahertz (10a, c) le long d'un premier axe optique partiel (A1) sur l'objet à tester (8) et rétro-réflexion vers le moyen de division de faisceau (4, 40) du premier rayonnement de détection en térahertz (10a, c) sur des surfaces limites de l'objet à tester (8) comme premier rayonnement de détection en térahertz (10a) réfléchi,
émission du deuxième rayonnement en térahertz de détection (10b) via un moyen de réflexion (5) avec au moins une réflexion sur le moyen de réflexion (5) et
orientation du deuxième rayonnement de détection en térahertz (10b, d) sur l'objet à tester (8) le long d'un deuxième axe optique partiel (A2) différent du premier axe optique partiel (A1),
rétro-réflexion du deuxième rayonnement en térahertz partiel (10b) réfléchi sur l'objet à tester (8) vers le moyen de division de faisceau (4, 40),
conduction du premier et du deuxième rayonnement de détection en térahertz (10a, 10b, 10c, 10d) réfléchis à partir du moyen de division de faisceau (4, 40) vers le moyen d'émission et de réception (2, 2a, 2b) et réception dans le moyen d'émission et de réception (2, 2a, 2b),
génération d'au moins un signal de mesure (M, M1, M2) et évaluation du signal de mesure (M, M1, M2) et détermination d'épaisseurs de couches de l'objet à tester (8).

16. Procédé de mesure suivant la revendication 15, **caractérisé en ce que** le rayonnement en térahertz émis (10) est divisé simultanément par un séparateur de faisceau (4) servant de moyen de division de faisceau en un premier rayonnement partiel (10a) constituant le premier rayonnement de détection et un deuxième rayonnement partiel (10b) constituant le deuxième rayonnement de détection, rayonnements qui sont regroupés après la réflexion sur l'objet à tester (8), puis reçus dans un signal de mesure (M) commun.

17. Procédé de mesure suivant la revendication 16, **caractérisé en ce que** le deuxième rayonnement en térahertz (10b) est émis par rapport au premier rayonnement en térahertz partiel (10a) dans un parcours optique tellement plus long que la durée du premier signal de mesure (M1) du premier rayonnement en térahertz partiel (10a) est inférieure à la temporisation (Δt) du deuxième signal de mesure (M2) par rapport au premier signal de mesure (M1) et **en ce que** les deux signaux de mesure (M1, M2) des rayonnements en térahertz partiels (10a, 10b) sont présents de manière séparée dans le temps dans le signal de mesure commun (M).

18. Procédé de mesure suivant la revendication 15, **caractérisé en ce que** comme moyen de division de faisceau, un miroir réglable (40) est réglé entre une première et une deuxième position, dans lesquelles il dévie le rayonnement en THz le long d'axes optiques partiels différents (A1, A2).
